# EUROPÄISCHE PATENTSCHRIFT

(11) **EP 3 581 325 B1**
(45) Veröffentlichungstag und Bekanntmachung des Hinweises auf die Patenterteilung: **14.10.2020**
(21) Anmeldenummer: 19182039.8
(22) Anmeldetag: 13.03.2017
(51) Int. Cl.: B23P 9/02, B24B 39/04, C21D 7/08, B23B 5/32

(54) **VERFAHREN ZUR BEARBEITUNG DER RADLAUFFLÄCHEN VON RÄDERN FÜR SCHIENENFAHRZEUGE**
METHOD FOR THE TREATMENT OF WHEEL TREADS OF WHEELS FOR RAILWAY VEHICLES
PROCÉDÉ DE TRAITEMENT DE LA SURFACE DE ROULEMENT DE ROUES POUR VÉHICULES SUR RAILS

(43) Veröffentlichungstag der Anmeldung: 18.12.2019
(62) Teilanmeldung aus: 17160611.4
(73) Patentinhaber: HEGENSCHEIDT-MFD GmbH, 41812 Erkelenz (DE)
(72) Erfinder: Maldaner, Jandrey, 52159 Roetgen (DE); Rudi, Alexander, 52538 Gangelt (DE)
(74) Vertreter: Rausch Wanischeck-Bergmann Brinkmann

(56) Entgegenhaltungen:
- WO-A2-2016/041540
- DE-B- 1 278 274
- DE-U- 1 803 783
- DE-U- 1 857 319
- UA-C2- 77 086
- US-A- 4 835 826
- US-A1- 2005 155 203

## Beschreibung

Die vorliegende Erfindung betrifft ein Verfahren zur Bearbeitung der Radlaufflächen von Rädern für: Schienenfahrzeuge gemäß dem Oberbegriff des Anspruchs 1. Ein solches Verfahren ist aus der UA 77 086 C2 bekannt.

Radsätze von Schienenfahrzeugen sind dafür ausgelegt, durch ständigen Kontakt zwischen Rad und Schiene eine sichere Abstützung und Führung des Schienenfahrzeuges zu gewährleisten. Die Radsätze werden durch diesen Rollkontakt unmittelbar beansprucht und sind für eine kontrollierte Fahrzeugbewegung sicherheitsrelevant. Im Zusammenwirken mit der Schiene bestimmt die Geometrie der Radlauffläche den Lauf der Fahrzeuge. In der Instandhaltung von Schienenfahrzeugen kommt dem Radsatz daher eine besondere Bedeutung zu. Die hohen Anforderungen an die Zuverlässigkeit und Qualität erfordern eine regelmäßige Kontrolle und Beurteilung des aktuellen Bauteilzustandes und des verfügbaren Verschleißvorrates.

Das Rad-Schiene-System unterliegt im Fahrbetrieb durch die permanenten Gleit- und Rollbewegungen verschiedenen Verschleißmechanismen. Die daraus folgende Deformation des Radlaufflächenprofils stellt neben einer akustischen Störquelle für die Fahrgäste und Umgebung auch eine Gefahr des Materialversagens für den Radsatz und die umliegenden Bauteile, wie beispielswiese Radlager und Fahrwerk dar. Dieses Problem soll durch das sogenannte Reprofilieren des Radlaufflächenprofils weitgehend vermieden werden.

Bei der Gestaltung des Profils der Radlaufflächen wird eine sichere, fahrkomfortable und verschleißarme Führung angestrebt. Deshalb werden Konturen realisiert, die den natürlichen Verschleiß zwischen Rad und Schiene berücksichtigen. Im Idealfall sollen sich die Konturen während des Betriebes der Schienenfahrzeuge nicht oder nur geringfügig verändern.

Der entstehende Verschleiß durch den Werkstoffabtrag an Rad und Schiene ist primär von der Reibleistung in der Kontaktzone und von der Werkstoffpaarung abhängig. Grundsätzlich wird dabei zwischen einem Laufflächen- und Spurkranzverschleiß unterschieden. Durch Zusammenlegung dieser beiden Verschleißprofile ergibt sich ein mögliches Verschleißprofil, welches zu reprofilieren ist.

Eine derartige Reprofilierung kann mit Radsatzbearbeitungsmaschinen durchgeführt werden, die in verschiedenartigen Varianten bekannt sind, zum Beispiel als Unterflur- oder Überflur-Ausführung sowie in Flachbett- und Portalbauweise. Mit den Radsatzbearbeitungsmaschinen werden die Radlaufflächen unter Anwendung von spanabhebenden Verfahren, vorzugsweise mittels Drehen bearbeitet, so dass diese Maschinen auch als Radsatzdrehmaschinen bezeichnet werden.

Ausgehend von der Erkenntnis, dass durch Einbringen von Druckeigenspannungen in die Oberflächen rotationssymmetrischer Körper das Verschleißverhalten verbessert werden kann, wurde bereits vorgeschlagen, ausgewählte Abschnitte von Radsätzen unmittelbar nach der Radherstellung im Neuzustand oder später nach einer erfolgreichen Reprofilierung einer zusätzlichen Festwalzbearbeitung zu unterziehen. Somit kann eine Erhöhung der weiteren Lebensdauer der Radlaufflächen durch das Festwalzen erreicht werden.

Das Festwalzen der Oberfläche ist ein mechanisches minimalinvasives Umformen der Bauteilrandschicht. Dabei werden geeignete Walzkörper unter Anpressdruck definiert über die Oberfläche des fertigen Bauteils geführt. Der direkte Bauteil-Kontaktbereich wird plastisch und der angrenzende Kontaktbereich wird elastisch verformt. In Abhängigkeit der jeweils konkreten Kontaktverhältnisse wird lediglich die Oberfläche geglättet, wobei kleine Kerben eingeebnet werden oder der Werkstoff im plastisch verformten Volumen verfestigt wird.

Bei Anwendung des Festwalzens für Radsätze wird somit durch die Kaltverfestigung der Radlaufflächen eine Glättung beziehungsweise Reduzierung der Oberflächenrauheit, eine Aufhärtung der Randschicht und eine Einbringung von Druckeigenspannungen in die Randzone erreicht. Durch die Umformung können in der Werkstückrandschicht vorhandene schädliche Eigenspannungen aus der spanenden Vorbearbeitung abgebaut werden. Im Zusammenwirken von elastischen und plastischen Verformungen wird ein festigkeitsmäßig vorteilhafter Eigenspannungszustand neu aufgeprägt. In der äußeren Randschicht sind nach dem Festwalzen Druckeigenspannungen vorhanden, die eine Verminderung des Verschleißes der Radlaufflächen beziehungsweise eine Steigerung der Laufleistung der Schienenfahrzeugräder bewirken. Dadurch werden sowohl das Auftreten eventueller Risse als auch deren Fortschreiten erheblich eingeschränkt. Diese ausschließlich mechanische Oberflächenbehandlung durch Festwalzen ist ein sehr effektives, umweltfreundliches und ressourcenschonendes Verfahren.

In DE 808 197 wird eine Rolle zum Festwalzen von Achsschenkeln an Eisenbahnradsätzen beschrieben. Die Arbeitsfläche dieser Festwalzrolle besteht aus einem zylinderförmigen Grundkörper. Beim Festwalzen verläuft die Achse der Festwalzrolle schräg zur Achse des Achsschenkels und erzeugt auf der zu bearbeitenden Oberfläche einen lang gestreckten tropfenförmigen Abdruck. Demzufolge werden im Bereich des Abdrucks durch das Festwalzen Eigenspannungen in die Oberfläche der Achsschenkel eingebracht, wodurch das Auftreten neuer Risse vermieden oder bereits vorhandene Risse zum Stillstand gebracht werden sollen. Im Ergebnis wird durch das Festwalzen eine Erhöhung der Lebensdauer eines Radsatzes erreicht. Die Anlagekraft der Festwalzrolle wird durch Vorspannmittel erzeugt.

Ein weiterer Lösungsansatz zum Festwalzen zylindrischer Wellen ist aus DE 843 822 bekannt. Diese Vorrichtung weist eine oder mehrere Festwalzrollen auf. Dabei ist jede Festwalzrolle in einem schwenkbaren Träger gelagert, dessen Schwenkachse senkrecht zur Zustellbewegung der Festwalzrolle und annähernd senkrecht zur Radsatzwelle verläuft. Auch hier wird die Anlagekraft der Walzen durch entsprechende Vorspannmittel, Federn und dgl. bewirkt.

Mit der Vorrichtung zum Festwalzen von Verschleißflächen am Profil vorgedrehter Radsätze gemäß DE 1 278 274 können unterschiedliche Relativpositionen zwischen der Festwalzrolle, deren Vorschubrichtung und der Radsatzdrehachse eingestellt werden. Für das Gleitwalzen wird hier extra eine Zusatzvorrichtung mit hydraulischer Vorspannung einer Gegenlagerwalze beschrieben.

Die Vorteile des Festwalzens insbesondere im Anschluss an eine Reprofilierung durch die spanabhebende Bearbeitung, insbesondere Drehen, sind bekannt und umfassend beschrieben.

Es hat sich gezeigt, dass das Festwalzen nicht zwingend eine einheitliche Randschicht erzeugt, sodass entweder eine reprofilierte Geometrie mit der die Fläche unterschiedlich verteilten Festigkeitseigenschaften entsteht oder durch das Festwalzen die reprofilierte Geometrie geringfügig verändert wird.

So werden nach dem Stand der Technik nach den vorbekannten Verfahren mit den vorgeschlagenen Vorrichtungen gute Ergebnisse in der Walzverfestigung erzielt, jedoch nicht die beschriebenen Unzulänglichkeiten berücksichtigt und ausgeräumt.

Ausgehend vom vorbeschriebenen Stand der Technik liegt der vorliegenden Erfindung die Aufgabe zu Grunde, das Verfahren zur Bearbeitung von Radlaufflächen von Schienenfahrzeugen dahingehend zu optimieren, dass auch nach dem Festwalzen eine verbesserte Oberflächenhomogenität bei optimiertem Profil erzielt werden kann.

Verfahrensseitig wird zur technischen Lösung dieser Aufgabe ein Verfahren mit den Merkmalen des Patentanspruches 1 vorgeschlagen. Weitere Vorteile und Merkmale ergeben sich aus den Unteransprüchen.

Gemäß dem erfindungsgemäßen Verfahren ist vorgesehen, dass beispielsweise nach einer Reprofilierung in üblicher Weise eine Walzbearbeitung durchgeführt wird. Dabei wird die Walzbearbeitung unter einer definierten und steuerbaren Kraft durchgeführt, so dass das Endergebnis deutlich verbessert ist.

Das erfindungsgemäße Vorgehen hat zum Einen den Vorteil, dass im Endstadium eine weitgehend homogenisierte Oberflächenbeschaffenheit bei optimierter geometrischer Ausbildung des Rades erreicht ist. Sowohl in Abhängigkeit von dem jeweiligen Walzort und der Lage der jeweiligen Festwalzrolle, ggf. auch ihrer Geometrie lässt sich nunmehr an jeder zu bearbeitenden Stelle eine definierte Walzkraft anwenden und somit ein optimales Endergebnis erzielt werden.

So kann eine Reprofilierung durch mehrfach aufeinander folgende Schritte des Vermessens und des spanabhebenden Bearbeitens durchgeführt werden. Die spanabhebende Bearbeitung ist vorzugsweise Drehen. Aber selbstverständlich sind auch andere Verfahren einsetzbar, die möglicherweise zeitoptimiert verwendet werden können. Darunter zählen Schleifen, Fräsen und dergleichen. Durch die erfindungsgemäße Ausgestaltung des Verfahrens und die auf das Walzen nachfolgende Nachbearbeitung ergibt sich hier eine größere Flexibilität. Dies führt zu besseren Arbeitsergebnissen in kürzeren Bearbeitungszeiten.

In vorteilhafter Weise wird eine Einspannstelle verwendet, um zum Einen das Werkzeug für die spanabhebende Bearbeitung, zum Anderen für das Walzen einsetzen zu können. Diese Einspannposition kann eine definierte Position relativ zum ausgerichteten und zu bearbeitenden Rad haben und somit kann eine optimierte Steuerung eingesetzt werden, die das Rad in kürzester Zeit auf eine optimale Geometrie bringt. Je nach Vorrichtung können eine Vielzahl von Einspannstellen verwendet werden, die flexibel bestückbar sind. Je nach Bearbeitungsvorgang kann dann eine entsprechende Steuerung zum Einsatz kommen.

Mit der Erfindung wird ein neuartiges Verfahren zur Bearbeitung der Radlaufflächen von Radsätzen für Schienenfahrzeuge bereitgestellt, welches an beliebigen Maschinen, Unterflur, Überflur, mobil und dergleichen einsetzbar ist. Es optimiert zum Einen die Bearbeitungszeit, zum Anderen die endgültige Radgeometrie. Darüber hinaus wird die Oberflächenqualität des gewalzten Rades deutlich verbessert, woraus eine verlängerte Standzeit resultieren kann.

Es ist möglich, aufeinanderfolgende spanabhebende Bearbeitungen einerseits und festwalzende Bearbeitungen andererseits in beliebiger Reihenfolge durchzuführen und diese durch entsprechende Vermessungen zu ergänzen. Auf diese Weise kann in zeit- und geometrieoptimierter Weise eine sehr präzise Bearbeitung und Steuerung erfolgen. Darüber hinaus können sehr flexibel Werkzeuge für die Spanbearbeitung einerseits und unterschiedliche Walzeinheiten eingesetzt werden, je nachdem, ob Teilprofile oder Gesamtprofile bearbeitet werden.

Gemäß der Erfindung wird eine mit geringem wirtschaftlichem Aufwand umsetzbare Lösung bereitgestellt, mit welcher optimierte Rädergeometrien herstellbar sind. Insbesondere kann die Erfindung auch erhebliche Zeiteinsparungen mit sich bringen. Weitere Vorteile und Merkmale ergeben sich aus der Beschreibung anhand der Figuren. Dabei zeigen:
- Fig. 1: eine perspektivische Darstellung einer Vorrichtung zur Durchführung des erfindungsgemäßen Verfahrens in einer Reprofilierungskonstellation;
- Fig. 2: eine Darstellung gemäß Fig. 1 in einer Walzkonstellation und

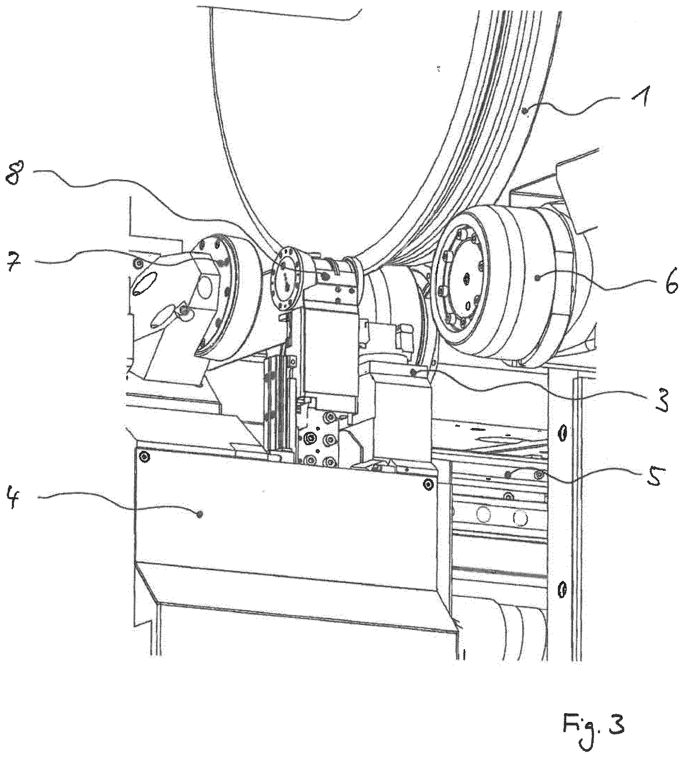

- Fig. 3: eine Darstellung gemäß Fig. 1 in einer Messkonstellation.

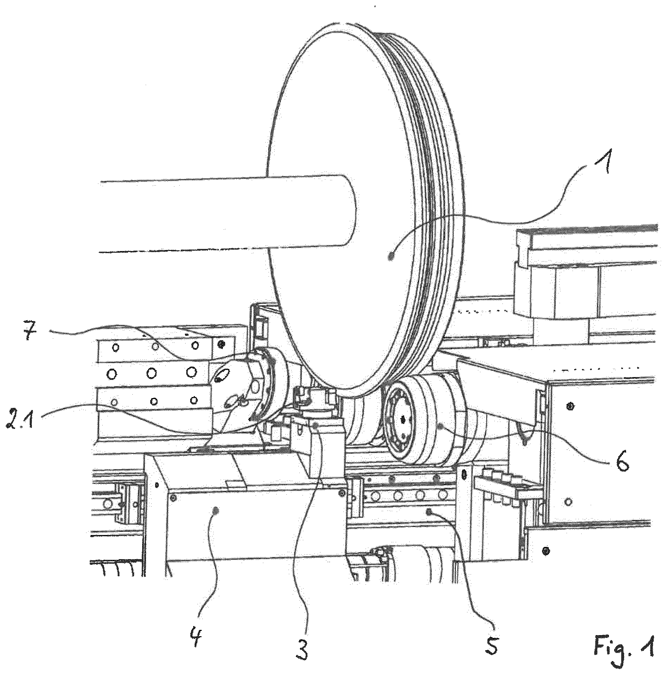

In den Figuren sind gleiche Elemente mit gleichen Bezugszeichen versehen. Die Figuren zeigen beispielhaft eine Radbearbeitungsmaschine 5. Eine Radbearbeitungsmaschine bedeutet, dass ein Radsatz 1 über entsprechende Transportwege an eine bestimmte Position gebracht wird, wie sie in den Figuren gezeigt ist. Der Radsatz 1 wird durch Antriebsrollen 6 in Drehung versetzt. Ein Werkzeughalter/Einspanneinheit 3 ist im Beispiel der Figur 1 mit einem Drehwerkzeug 2.1 bestückt und ist definiert positionierbar auf dem Support 4 montiert. Der in Drehung versetzte Radsatz kann nunmehr mittels Drehwerkzeug 2.1 bearbeitet werden. Bezugsziffer 6 bezeichnet die axiale Führungsrolle, welche axial auftretende Kräfte aufnehmen und den Radsatz 1 axial fixieren.

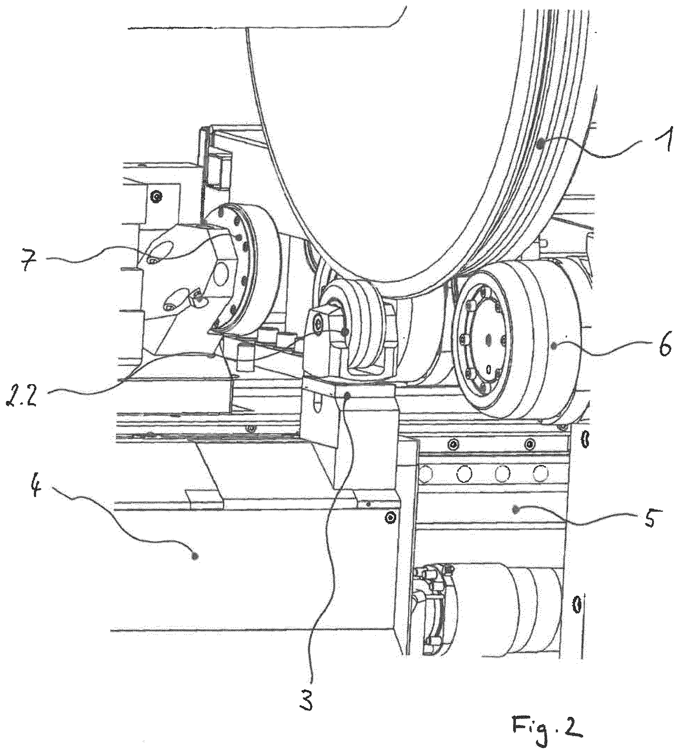

In den Werkzeughalter 3 ist gemäß Fig. 2 ein Walzwerkzeug 2.2 eingesetzt, so dass beispielsweise im Anschluss an eine Reprofilierung durch Drehen nunmehr ein Festwalzen erfolgen kann.

In der besonderen Ausführungsform kann die Maschine 1 auch mit einem Vermessungswerkzeug 8 mit Messtastern versehen werden. Auf diese Weise kann direkt eine anschließende Vermessung beispielsweise nach der Reprofilierung und/oder auch nach dem Festwalzen durchgeführt werden. Das Vermessungswerkzeug 8 ist im Support integriert und kann neben dem Halter 3 herausgefahren werden.

Das beschriebene Ausführungsbeispiel dient nur der Erläuterung und ist nicht beschränkend.

### Bezugszeichenliste

- 1.: Radsatz
- 2.1: Drehwerkzeug
- 2.2: Walzwerkzeug
- 3.: Einspanneinheit
- 4.: Werkzeugsupport
- 5.: Radbearbeitungsmaschine
- 6.: Antriebsrolle
- 7.: Axiale Führungsrolle
- 8.: Messeinrichtung

## Patentansprüche

1. Verfahren zur Bearbeitung der Radlaufflächen von Rädern für Schienenfahrzeuge mittels einer Radbearbeitungsmaschine, wobei in einem Verfahrensschritt eine Walzbearbeitung der Räder mit einer Festwalzrolle durchgeführt wird, **dadurch gekennzeichnet, dass** die Walzkraft durch die Steuerung der Drehmomente von Antriebsmotoren der Vorschubachsen des Walzwerkzeuges (2.2) einstellbar ist.

2. Verfahren nach Anspruch 1, **dadurch gekennzeichnet, dass** sich die Walzbearbeitung nach einer Grundeinstellung der Räder und der Bearbeitungsmaschine relativ zueinander an eine Reprofilierung durch mindestens eine Vermessung der Räder und eine spanabhebende Bearbeitung der Räder anschließt.

3. Verfahren nach Anspruch 2, **dadurch gekennzeichnet, dass** zur Reprofilierung eine Vermessung und eine spanabhebende Bearbeitung aufeinanderfolgend mehrfach bis zur Erzielung eines vorgegebenen Reprofilierungsergebnisses durchgeführt werden.

4. Verfahren nach einem der vorhergehenden Ansprüche, **dadurch gekennzeichnet, dass** zur spanabhebenden Bearbeitung Drehen eingesetzt wird.

5. Verfahren nach einem der vorhergehenden Ansprüche, **dadurch gekennzeichnet, dass** zur spanabhebenden Bearbeitung einerseits und zum Walzbearbeitung andererseits jeweils ein an der gleichen Einspannposition eingesetztes Werkzeug (2.1 bzw. 2.2) verwendet wird.

6. Verfahren nach einem der vorhergehenden Ansprüche, **dadurch gekennzeichnet, dass** im Anschluss an die Walzbearbeitung eine Vermessung vorgenommen wird.

7. Verfahren nach einem der vorhergehenden Ansprüche, **dadurch gekennzeichnet, dass** dieses auf einzelne Teilprofile eines Rades anwendbar ist.

## Claims

1. Method for machining the wheel running surfaces of wheels for rail vehicles by means of a wheel machining machine, wherein in a process step a rolling process is performed on the wheels with a work roller, **characterised in that** the rolling force can be adjusted by controlling the torques of drive motors of the feed axles of the rolling tool (2.2).

2. Method in accordance with Claim 1, **characterised in that** the rolling process, after a basic setting of the wheels and the processing machine relative to one another, follows a reprofiling by at least one measurement of the wheels and a machining of the wheels.

3. Method in accordance with Claim 2, **characterised in that**, for reprofiling, measurement and machining are carried out multiple times successively until a specified reprofiling result is achieved.

4. Method in accordance with one of the preceding Claims, **characterised in that** machining is effected by turning.

5. Method in accordance with one of the preceding Claims, **characterised in that** for machining on the one hand and for the rolling process on the other hand, respectively, a tool (2.1 or 2.2) clamped in the same clamping position is used.

6. Method in accordance with one of the preceding Claims, **characterised in that** a measurement is carried out after the rolling process.

7. Method in accordance with one of the preceding Claims, **characterised in that** this is applicable to individual partial profiles of a wheel.

## Revendications

1. Procédé d'usinage des surfaces de roulement de roues pour véhicules sur rail au moyen d'une machine d'usinage de roue, un usinage des roues par laminage étant réalisé à l'aide d'un galet lors d'une étape du procédé, **caractérisé en ce que** la force de laminage peut être réglée via la commande des couples de serrage de moteurs d'entraînement des axes d'avance de l'outil de laminage (2.2).

2. Procédé selon la revendication 1, **caractérisé en ce que** l'usinage par laminage, après un réglage de base des roues et de la machine d'usinage les unes par rapport à l'autre, se joint à un reprofilage consistant au minimum en un mesurage des roues et en un usinage des roues par enlèvement de copeaux.

3. Procédé selon la revendication 2, **caractérisé en ce qu'**un mesurage et un usinage par enlèvement de copeaux sont effectués plusieurs fois de manière successive pour le reprofilage, et ce jusqu'à obtention d'un résultat de reprofilage prédéfini.

4. Procédé selon l'une des revendications précédentes, **caractérisé en ce que** le tournage est utilisé pour l'usinage par enlèvement de copeaux.

5. Procédé selon l'une des revendications précédentes, **caractérisé en ce qu'**un outil (2.1 ou 2.2) utilisé à la même position de serrage est à chaque fois utilisé pour l'usinage par enlèvement de copeaux d'une part et pour l'usinage par laminage d'autre part.

6. Procédé selon l'une des revendications précédentes, **caractérisé en ce qu'**un mesurage est effectué à la suite de l'usinage par laminage.

7. Procédé selon l'une des revendications précédentes, **caractérisé en ce que** ce dernier est applicable à différents profils partiels d'une roue.
